**Europäisches Patentamt**

(19) **European Patent Office**

**Office européen des brevets**

(11) Veröffentlichungsnummer: **0 224 677**
**B1**

(12) # EUROPÄISCHE PATENTSCHRIFT

(45) Veröffentlichungstag der Patentschrift:
15.11.89

(51) Int. Cl.⁴: **B 62 D 1/18**

(21) Anmeldenummer: **86113720.6**

(22) Anmeldetag: **03.10.86**

(54) **Lenksäulenabdichtung.**

(30) Priorität: **27.11.85 DE 3541825**

(43) Veröffentlichungstag der Anmeldung:
**10.06.87 Patentblatt 87/24**

(45) Bekanntmachung des Hinweises auf die Patenterteilung:
**15.11.89 Patentblatt 89/46**

(84) Benannte Vertragsstaaten:
**DE FR GB IT NL SE**

(56) Entgegenhaltungen:
**EP-A-0 125 211**
**DD-A-141 140**
**DE-B-2 328 232**
**US-A-4 257 624**
**US-A-4 548 291**

**SOVIET INVENTIONS ILLUSTRATED, SEKTIONS P, Q, WOCHE C 36, 15. OKTOBER 1980. DERWENT PUBLICATIONS LTD., LONDON, Q 13**

(73) Patentinhaber: **MAN Nutzfahrzeuge Aktiengesellschaft, Dachauer Strasse 667 Postfach 50 06 20, D-8000 München 50 (DE)**

(72) Erfinder: **Schmidt, Werner, Vogelloh 54, D-8000 München 50 (DE)**
Erfinder: **Schnepper, Udo, Vogelloh 64, D-8000 München 50 (DE)**

EP 0 224 677 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Lenksäulenabdichtung in kippbaren Fahrerhäusern von Kraftfahrzeugen, insbesondere von Lastkraftwagen.

Beim Kippen von LKW-Fahrerhäusern für Wartungs- und Reparaturarbeiten müssen die Lenksäule und/oder der Schalthebelbalg vom Boden des Fahrerhauses getrennt werden, d. h., es muß eine lösbare Verbindung zwischen z. B. der Lenksäule und dem Boden vorhanden sein. Nach dem bisherigen Stand der Technik wurde diese Verbindung mittels eines Spannbandes, daß das bodenseitige Ende der Lenksäule mit einem aus dem Boden herausragenden Kragen verband, hergestellt. Nach einer anderen Variante wurde eine Schraubenverbindung verwendet. Verbindungen dieser Art haben gemeinhin den Nachteil, daß zu ihrem Lösen und Wiederbefestigen Werkzeuge benötigt werden, mehr noch störend sind die Befestigungteile selbst, die als lose Einzelteile leicht abhanden kommen können und somit die Wiederinbetriebnahme verzögern, davon abgesehen verursachen sie auch noch Kosten.

Der Erfindung liegt die Aufgabe zugrunde, eine Verbindung zwischen Lenksäule und Fahrerhausboden zu schaffen, die perfekt dichtet und gleichzeitig mit wenig Aufwand und unter Verzicht auf zusätzliche, lose Elemente schnell lösbar und wiederbefestigbar ist.

Dies wird erfindungsgemäß erzielt durch einen bodenseitig an der Lenksäule angeordneten Schnappverschluß gemäß Anspruch 1. Der besondere Vorteil dieser Anordnung ist das Fehlen jeglicher loser Verbindungsteile. Außer dem einstückig mit der Lenksäule integrierten weiblichen Verbindungsglied, dem Schnappverschluß und dem männlichen Verbindungsglied, dem vertikalen Schenkel des Haltestückes, fällt kein weiteres Teil an, und es erübrigt sich ein oft mühsames Suchen nach fehlenden Einzelteilen wie Schrauben, Muttern, Scheiben, Bändern usw. Demzufolge werden auch keine Werkzeuge benötigt. Die erfindungsgemäße Schnappverschließung rastet, auch beim Fahren absolut vibrationssicher, in das Haltestück ein, wobei der Effekt, insbesondere durch das Untergreifen einer vorzugsweise einstückig am Schnappverschluß ausgebildeten Lippe unter die Kröpfung des vertikalen Schenkels des Haltestückes, erreicht wird und eine weitere erfindungsrelevante Voraussetzung in der Struktur des Schnappverschlusses gegeben ist, nämlich, daß der von elastomeren Wänden umgebene Kern ein Metallband mit Federeigenschaften ist, so daß zum einen durch Untergreifen der Kröpfung ein Formschluß, zum anderen durch Federwirkung des Metallbandes und elastischer Eigenschaften der Lippen ein Kraftschluß erfolgt. Diese Anordnung bringt auch eine ausgezeichnete Dichtwirkung mit sich, so daß sowohl Feuchtigkeit und Verschmutzung wie auch - und dies ist besonders hervorzuheben - Geräusche weitgehend eliminiert werden.

Fertigungstechnisch ist es eine günstige Weiterbildung der Erfindung, den Schnappverschluß in eine wulstartige Verdickung bodenseitig der Lenksäule direkt mit einzuspritzen. Solcherart läßt sich eine gute Maßhaltigkeit erzielen.

Die geometrische Ausgestaltung der Dichtlippen ist so gestaltet, daß ein leichtes Einfädeln des Schnappverschlusses über das Haltestück gewährleistet ist und eine sichere Verrasterung erzielt wird. Zum Ausrücken des Schnappverschlusses und somit zum Lösen der Lenksäule bedarf es trotz des festen Sitzes im Halter nur einer normalen Ausrückkraft.

Weitere Vorteile und Merkmale der Erfindung sind den Ansprüchen, der Beschreibung und den Zeichnungen entnehmbar.

Die Erfindung ist in einem Ausführungsbeispiel dargestellt.

Es zeigen:

Fig. 1      einen Lenksäulenausschnitt mit Lenksäulendichtung im Längsschnitt

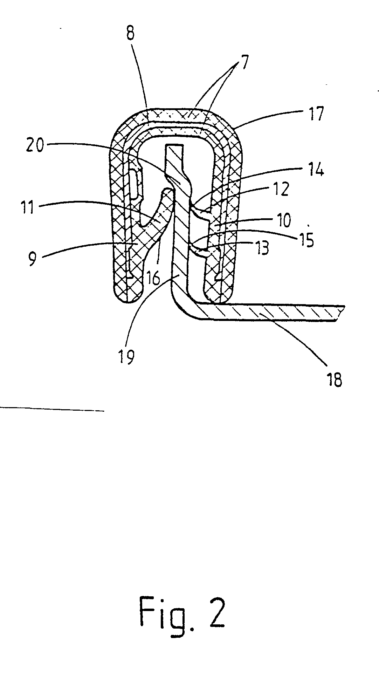

Fig. 2      einen vergrößerten Ausschnitt der Lenksäulenabdichtung

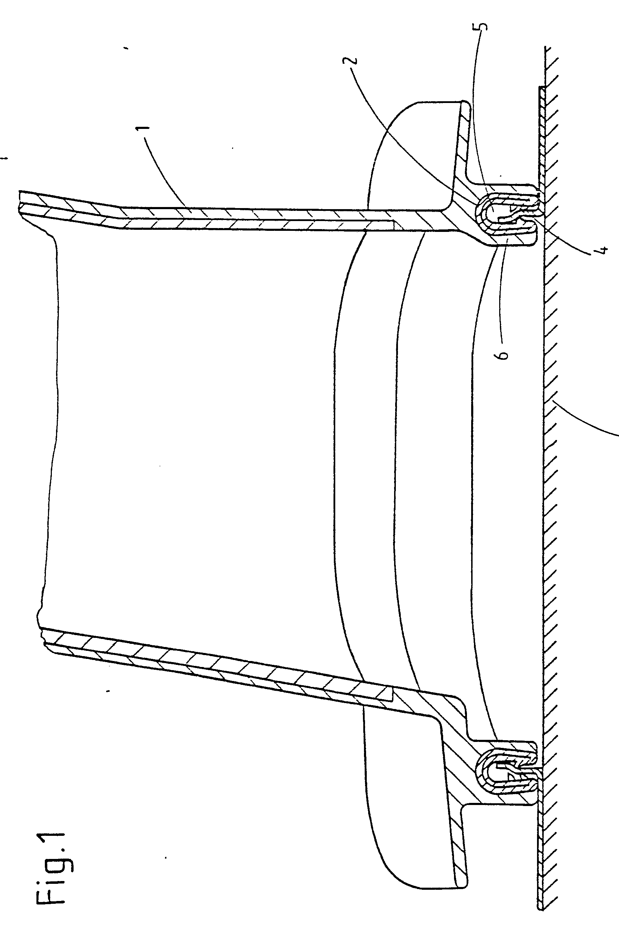

Fig. 1 zeigt eine Lenksäule mit einer bodenseitigen, wulstartigen Verdickung 6, in der sich eine Ausnehmung 5 befindet, worin ein U-förmig ausgebildeter Schnappverschluß 2 eingelassen ist. Vorzugsweise wird er bei der Herstellung der Lenksäule 1 mit eingespritzt. Der Schnappverschluß umgreift das auf dem Boden 3 des Fahrerhauses fest angebrachte Haltestück 4. Der Kern des Schnappverschlusses bildet ein federndes Metallband 8, das von elastomeren Wandungen 7 umhüllt ist. An der inneren, vertikalen Kunststoffwand 9 ist eine längere, aufwärts gerichtete Lippe 11 einstückig angeformt, währenddessen an der anderen inneren Kunststoffwand 10 mehrere kürzere Lippen 12, 13 einstückig angeordnet sind. Die Spitzen 14, 15 der Lippen 12, 13 liegen dichtend an dem vertikalen Schenkel 19 des Haltestückes 4 an. Das Haltestück 4 ist mit seinem horizontalen Schenkel 18 auf dem Boden 3 des Fahrerhauses befestigt. Die Außenkontur 16 der Lippe 11 liegt rastend in der Kröpfung 20 des vertikalen Schenkels 19 des Haltestückes 4. Die Außenwand 17 des Schnappverschlusses 2 ist zum besseren Halt in der Ausnehmung 5 des der wulstartigen Verdickung 6 profiliert oder aufgerauht.

Selbstverständlich ist auch eine Umkehrung der Verbindung und der Eingriffsverhältnisse denkbar, dann würde sich das männliche Verschlußstück an der Lenksäule und das weibliche am Boden befinden. Eine weitere, aus der Erfindung abzuleitende Möglichkeit wäre die Verriegelung in der Horizontalen mit entsprechend angeordneten Schnappeinheiten.

## Bezugszeichenliste

1 Lenksäule
2 Schnappverschluß
3 Boden (des Fahrerhauses)
4 Haltestück
5 Ausnehmung in 6
6 wulstartige Verdickung
7 elastomere Wandungen
8 Metallband
9 innere vertikale Kunststoffwand
10 innere vertikale Kunststoffwand
11 Lippe
12 Lippe
13 Lippe
14 Spitze von 12
15 Spitze von 13
16 Außenkontur von 11
17 Außenwand von 2
18 horizontaler Schenkel von 4
19 vertikaler Schenkel von 4
20 Kröpfung an 19

## Patentansprüche

1. Lenksäulenabdichtung in kippbaren Fahrerhäusern von Kraftfahrzeugen, insbesondere von Lastkraftwagen, gekennzeichnet durch eine schnappverschlußartige, lösbare Verbindung (2) zwischen der Lenksäule (1) und dem Boden (3) des Fahrerhauses, wobei die schnappverschlußartige Verbindung (2), von einem fest mit dem Boden (3) verbundenen, profilierten Haltestück (4) form- und/oder kraftschlüssig, dichtend umgriffen ist.

2. Lenksäulenabdichtung nach Anspruch 1, dadurch gekennzeichnet, daß der Schnappverschluß (2) in einer Ausnehmung (5) einer wulstartigen Verdickung (6) am Lenksäulenboden eingelassen ist.

3. Lenksäulenabdichtung nach Anspruch 1 oder 2, dadurch gekennzeichnet, daß der Schnappverschluß (2) in der Ausnehmung (5) eingespritzt ist.

4. Lenksäulenabdichtung nach Anspruch 1 oder 2, dadurch gekennzeichnet, daß der Schnappverschluß (2) in der Ausnehmung (5) eingeklebt ist.

5. Lenksäulenabdichtung nach einem oder mehreren der Ansprüche 1 bis 4, dadurch gekennzeichnet, daß der Schnappverschluß (2) im wesentlichen U-förmig ausgebildet ist und aus einem vorzugsweise gelochten, innen- und außenseitig in elastomeren Wandungen (7) vergossenen, federnden Metallband (8) besteht, wobei die inneren, vertikalen Kunststoffwände (9, 10) eine oder mehrere sich aus der Horizontalen schräg nach oben erstreckende Lippen (11, 12, 13) aufweisen.

6. Lenksäulenabdichtung nach Anspruch 5, dadurch gekennzeichnet, daß eine Innenwand (9) eine steil nach oben gerichtete Lippe (11) aufweist, während an der anderen Innenwand (10) mehrere Lippen (12, 13) angebracht sind, die mit ihren Spitzen (14, 15) in etwa tangential zu der Außenkontur (16) der Lippe (11) ausgerichtet sind und in kurzem Abstand zu ihr enden.

7. Lenksäulenabdichtung nach den Ansprüchen 5 und 6, dadurch gekennzeichnet, daß die Außenwand (17) des Schnappverschlusses (2) haftfreundlich profiliert oder geraucht ist.

8. Lenksäulenabdichtung nach einem oder mehreren der Ansprüche 1 bis 7, dadurch gekennzeichnet, daß das Haltestück (4) entweder aus dem flächigen Bauteil (Boden 3) ausgeformt oder ein gewinkeltes Blech oder ein gewinkeltes Kunststoffband ist, dessen horizontaler Schenkel (18) mit dem Boden (3) des Fahrerhauses verbunden ist und dessen freier vertikaler Schenkel (19) eine Kröpfung (20) aufweist.

9. Lenksäulenabdichtung nach einem oder mehreren der Ansprüche 1 bis 8, dadurch gekennzeichnet, daß die Lippe (11) des Schnappverschlusses (2) die Kröpfung (20) pressend hintergreift und die Lippen (12, 13) auf der anderen Seite dichtend gegen den Schenkel (19) anliegen.

## Claims

1. A steering column seal in the tiltable driver's cabs of motor vehicles, in particular lorries, characterized by a snap-fit-closure type detachable connection (2) between the steering column (1) and the floor (3) of the driver's cab, the snap-fit-closure type connection (2) being engaged in a sealing and form-locking and/or force-locking manner by a shaped holding piece (4) which is securely connected to the floor (3).

2. A steering column seal in accordance with Claim 1, characterized in that the snap-fit closure (2) is inserted in a recess (5) in a collar-shaped enlargement (6) on the steering column base.

3. A steering column seal in accordance with Claim 1 or 2, characterized in that the snap-fit closure (2) is injected in the recess (5).

4. A steering column seal in accordance with Claim 1 or 2, characterized in that the snap-fit closure (2) is glued in the recess (5).

5. A steering column seal in accordance with one or more of Claims 1 to 4, characterized in that the snap-fit closure (2) is essentially U-shaped and comprises a preferably perforated, resilient metal strip (8) encapsulated on the inside and the outside in elastomeric walls (7), the inner vertical plastics walls (9, 10) having one or more lips (11, 12, 13) extending inclinedly upwards from the horizontal.

6. A steering column seal in accordance with Claim 5, characterized in that one inner wall (9) has a lip (11) directed steeply upwards, whilst on the other inner wall (10) a plurality of lips (12, 13) are arranged with their tips aligned approximately tangentially to the outer contour (16) of the lip (11) and ending a short distance therefrom.

7. A steering column seal in accordance with Claims 5 and 6, characterized in that the outer wall (17) of the snap-fit closure (2) is shaped to be pro-adhesion or is roughened.

8. A steering column seal in accordance with one or more of Claims 1 to 7, characterized in that the holding piece (4) is formed from either the flat component (floor 3) or is an angular metal sheet or an angular plastics strip, having a horizontal leg (18) connected to the floor (3) of the driver's cab and a free vertical leg (19) with an elbow (20).

9. A steering column seal in accordance with one or more of Claims 1 to 8, characterized in that the lip (11) of the snap-fit closure (2) grips the elbow (20) from behind and the lips (12, 13) on the other side abut against the leg (19) in a sealing manner.

## Revendications

1. Dispositif d'étanchéité pour colonne de direction de cabine basculante de véhicule à moteur notamment de camion, caractérisé par une liaison amovible (2), en forme de liaison par encliquetage entre la colonne de direction (1) et le sol (3) de la cabine, la liaison (2) par encliquetage étant entourée par une pièce de maintien (4), profilée, solidaire du sol (3), par une liaison par la forme et/ou par la force et de manière étanche.

2. Dispositif d'étanchéité de colonne de direction selon la revendication 1, caractérisé en ce que le moyen de liaison par encliquetage (2) est introduit dans une cavité (5) d'un renforcement en forme de bourrelet (6) à l'extrémité inférieure de la colonne de direction.

3. Dispositif d'étanchéité de colonne de direction selon la revendication 1 ou 2, caractérisé en ce que le moyen de liaison par encliquetage (2) est injecté dans la cavité (6).

4. Dispositif d'étanchéité de colonne de direction selon la revendication 1 ou 2, caractérisé en ce que le moyen de liaison par encliquetage (2) est collé dans la cavité (5).

5. Dispositif d'étanchéité de colonne de direction selon l'une ou plusieurs des revendications 1 à 4, caractérisé en ce que le moyen de liaison par encliquetage (2) a une forme principalement en U et se compose d'un ruban métallique (8) à ressort, entouré de préférence sur sa face intérieure et sa face extérieure perforées, par des parois d'élastomère (7) et les parois de matière synthétique (9, 10) verticales intérieures comportent une ou plusieurs lèvres dirigées de manière inclinée par rapport à l'horizontale (11, 12, 13).

6. Dispositif d'étanchéité de colonne de direction selon la revendication 5, caractérisé en ce qu'une paroi intérieure (9) comporte une lèvre (11) dirigée de manière très inclinée vers le haut alors que l'autre paroi intérieure (10) comporte plusieurs lèvres (12, 13) dont les pointes (14, 15) sont alignées sensiblement de manière tangentielle par rapport au contour extérieur (16) de la lèvre (11) et se terminent à une faible distance de celle-ci.

7. Dispositif d'étanchéité de colonne de direction selon les revendications 5 et 6, caractérisé en ce que la paroi extérieure (17) du moyen de liaison par encliquetage (2) est profilée ou rendue rugueuse pour favoriser l'accrochage.

8. Dispositif d'étanchéité de colonne de direction selon une ou plusieurs des revendications 1 à 7, caractérisé en ce que la pièce de maintien (4) est mise en forme en partant d'une pièce plate (sol 3) ou encore d'une tôle pliée ou d'une bande de matière synthétique coudée, dont la branche horizontale (18) est reliée au sol (3) de la cabine et dont la branche verticale libre (19) comporte une partie coudée.

9. Dispositif d'étanchéité de colonne de direction selon une ou plusieurs des revendications 1 à 8, caractérisé en ce que la lèvre (11) du moyen de liaison par encliquetage (2) vient se presser derrière la partie coudée (20) et les lèvres (12, 13) de l'autre côté s'appliquent de manière étanche contre la branche (19).

Fig.1

Fig. 2